# EUROPÄISCHE PATENTSCHRIFT

(11) **EP 1 683 671 B1**
(45) Veröffentlichungstag und Bekanntmachung des Hinweises auf die Patenterteilung: **21.05.2008**
(21) Anmeldenummer: 05111537.6
(22) Anmeldetag: 01.12.2005
(51) Int. Cl.: B60K 15/03, F02M 37/10, F02D 41/30

(54) **Überwachungs- und Steuervorrichtung für Kraftfahrzeugtanks**
Monitor and control unit for vehicle fuel tank
Dispositif de surveillance et de contrôle pour réservoir de carburant de véhicule

(30) Priorität: 21.01.2005 DE 102005002893
(43) Veröffentlichungstag der Anmeldung: 26.07.2006
(73) Patentinhaber: TI Automotive (Neuss) GmbH, 41460 Neuss (DE)
(72) Erfinder: Lahn, Bernd-Jürgen, 41844 Wegberg (DE); Schreuder, Peter, 47623 Kevelaer (DE); Henschel, Matthias, 77836 Rheinmünster (DE); Strauss, Rainer, 41238 Mönchengladbach (DE); Neulen, Dirk, 52355 Düren (DE); Winkler, Andreas, 45470 Mühlheim (DE)
(74) Vertreter: von Kirschbaum, Alexander

(56) Entgegenhaltungen:
- WO-A-03/102405
- WO-A-20/05103477
- US-A- 4 763 611
- PATENT ABSTRACTS OF JAPAN Bd. 2003, Nr. 12, 5. Dezember 2003 (2003-12-05) -& JP 2004 249883 A (HONDA MOTOR CO LTD), 9. September 2004 (2004-09-09)
- PATENT ABSTRACTS OF JAPAN Bd. 006, Nr. 246 (M-176), 4. Dezember 1982 (1982-12-04) & JP 57 144127 A (HONDA GIKEN KOGYO KK), 6. September 1982 (1982-09-06)

## Beschreibung

Die Erfindung betrifft einen Kraftfahrzeugtank mit einer Überwachungs- und Steuervorrichtung.

Innerhalb eines Kraftfahrzeugtanks sind elektrische Vorrichtungen, wie Kraftstoffpumpen, Ventile, Füllstandsgeber etc. angeordnet. Über elektrische Leitungen sind diese Vorrichtungen mit einer Steuereinrichtung verbunden. Über elektrische Anschlüsse ist die Steuereinrichtung über den Kabelbaum mit der Energieversorgung und weiteren Steuergeräten verbunden. Moderne Kraftstofftanks, die üblicherweise aus Kunststoff bestehen, weisen eine Tanköffnung auf, durch die die Montage und der Service der innerhalb des Tanks angeordneten Vorrichtungen erfolgt.

Aus WO 03/102405 ist es bekannt, die Steuereinrichtung auf einem Tankverschluss, durch den die Service-Öffnung des Tanks verschlossen wird, anzuordnen. Da Kraftstofftanks üblicherweise aus Kunststoff hergestellt sind, besteht bei einer derartigen Anordnung der Steuereinrichtung die Gefahr, dass bei Überhitzung der Steuereinrichtung bzw. einzelner Bauteile der Steuereinrichtung der Kunststoff des Tanks aufschmilzt und heißer Kunststoff in den Tank tropft oder heiße Bauteile der Steuereinrichtung durch den aufgeschmolzenen Tankverschluss hindurch in den Tank fallen. Dies stellt ein erhebliches Sicherheitsrisiko dar.

Es ist ferner bekannt, die Steuereinrichtung in einem größeren Abstand zu dem Tank anzuordnen. Dies hat jedoch den Nachteil, dass die elektrischen Leitungen, die die Steuereinrichtung mit den in dem Tank vorgesehenen elektrischen Vorrichtungen verbinden, länger sein müssen. Dies führt zu erhöhten negativen EMV-Einflüssen durch Fremd- oder Eigenstörung.

Aufgabe der Erfindung ist es, einen Kraftfahrzeugtank zu schaffen, bei dem EMV-Einflüsse verringert werden und gleichzeitig eine hohe Sicherheit gewährleistet ist.

Die Lösung der Aufgabe erfolgt erfindungsgemäß durch die Merkmale des Anspruchs 1.

Bei dem erfindungsgemäßen Kraftfahrzeugtank ist die Steuereinrichtung mit einem Karosseriedeckel verbunden. Bei dem Karosseriedeckel handelt es sich um einen Verschluss einer in der Karosserie vorgesehenen Öffnung, durch die der Tank zugänglich ist. Die in der Karosserie vorgesehene Öffnung ist üblicherweise der Tanköffnung gegenüberliegend angeordnet. Die Karosserieöffnung ist erforderlich, um durch die Karosserieöffnung und die Tanköffnung hindurch die in dem Tank angeordneten Vorrichtungen zu warten oder auszutauschen.

Durch das Vorsehen der Steuereinrichtung an dem Karosseriedeckel ist gewährleistet, dass die Steuereinrichtung einen gewissen Abstand zu einem insbesondere aus Kunststoff hergestellten Tank aufweist. Dies hat zur Folge, dass auch heiße oder überhitzte Bauteile der Steuereinrichtung kein Aufschmilzen oder Beschädigen des Tanks bewirken. Hierdurch ist die Sicherheit erheblich verbessert.

Ferner weist das Anordnen der Steuereinrichtung an dem Karosseriedeckel den Vorteil auf, dass die Länge der elektrischen Leitungen, die von der Steuereinrichtung zu den in dem Tank vorgesehenen Vorrichtungen verlaufen, relativ kurz sind. Hierdurch ist gegenüber einer Anordnung der Steuereinrichtung in einem größeren Abstand zu dem Kraftstofftank die elektromagnetische Verträglichkeit verbessert.

Mit Hilfe der erfindungsgemäßen Anordnung der Steuereinrichtung an dem Karosseriedeckel ist somit bei guter elektronischer Verträglichkeit die Sicherheit verbessert.

Vorzugsweise kann mit der Steuereinrichtung und/ oder dem Karosseriedeckel eine Wärmeschutzeinrichtung verbunden sein. Durch die Wärmeschutzeinrichtung ist sichergestellt, dass auch bei Auftreten von Störungen in der Steuereinrichtung, die zur erheblichen Überhitzung von einzelnen Bauteilen führen können, der Kunststofftank nicht beschädigt wird. Hierbei kann es sich bei der Wärmeschutzeinrichtung um eine Wärmeisolationsschicht handeln.

Vorzugsweise ist als Wärmeschutzeinrichtung ein Material mit guter Wärmeleitfähigkeit und guter Formstabilität bei ggf. auftretenden Temperaturen vorgesehen. Beispielsweise handelt es sich um eine Metallplatte. Hierbei ist eine derartige Wärmeschutzeinrichtung vorzugsweise derart angeordnet, dass sie gleichzeitig als Kühleinrichtung für die Steuereinrichtung dient. Ggf. durch die Steuereinrichtung erzeugte Wärme wird somit auf Grund der Kühlung schnell abgeführt. Hierdurch ist die Sicherheit weiter verbessert.

Nachfolgend wird die Erfindung anhand bevorzugter Ausführungsformen unter Bezugnahme auf die anliegenden Zeichnungen näher erläutert.

Es zeigen:
- Fig. 1: eine schematische Seitenansicht des Kraftfahrzeugtanks mit einer Überwachungs- und Steuervorrichtung,
- Fig. 2: eine schematische Prinzipskizze einer auf einem Karosseriedeckel angeordneten Steuereinrichtung, und
- Fig. 3: eine schematische Prinzipskizze einer unter einem Karosseriedeckel angeordneten Steuereinrichtung.

Der Kraftfahrzeugtank 24 weist eine Steuereinrichtung 10 auf. Die Steuereinrichtung 10 ist mit einem Karosseriedeckel 12 verbunden. Durch den Karosseriedeckel 12, der beispielsweise aus Metall hergestellt sein kann, ist eine in einer Karosserie 14 vorgesehene Serviceöffnung 16 verschlossen.

Im dargestellten Ausführungsbeispiel ist unterhalb der Serviceöffnung 16 eine Tanköffnung 18 vorgesehen, die mit einem Tankverschluss 20 verschlossen ist. Im dargestellten Ausführungsbeispiel sind mit dem Tankverschluss 20 die schematisch dargestellten elektrischen Vorrichtungen 22 verbunden. Bei den elektrischen Vorrichtungen handelt es sich beispielsweise um eine Kraftstoffpumpe, einen Füllstandsgeber, Ventile, Sensoren etc. Selbstverständlich können die einzelnen elektrischen Vorrichtungen an unterschiedlichen Stellen innerhalb eines Kraftstofftanks 24 angeordnet sein.

Durch den Tankverschluss 20, der zur Wartung und zum Austausch von in dem Tank 24 angeordneten elektrischen Vorrichtungen 22 entfernt werden kann, verlaufen elektrische Leitungen 26. Ferner ist durch den Tankverschluss 22 hindurch eine Kraftstoffleitung 28 geführt. Die elektrischen Leitungen 26 verbinden die Steuereinrichtung 10 mit den einzelnen elektrischen Vorrichtungen 22, die innerhalb des Tanks 24 angeordnet sind. Ferner können mit der Steuereinrichtung über nicht dargestellte elektrische Leitungen auch weitere elektrische Bauteile verbunden sein, die in der unmittelbaren Umgebung des Kraftstofftanks 20 angeordnet sind. Über weitere elektrische Leitungen 30 ist die Steuereinrichtung 10 mit dem Kabelbaum und über diesen beispielsweise mit weiteren Steuereinrichtungen, einer Energiequelle etc. verbunden.

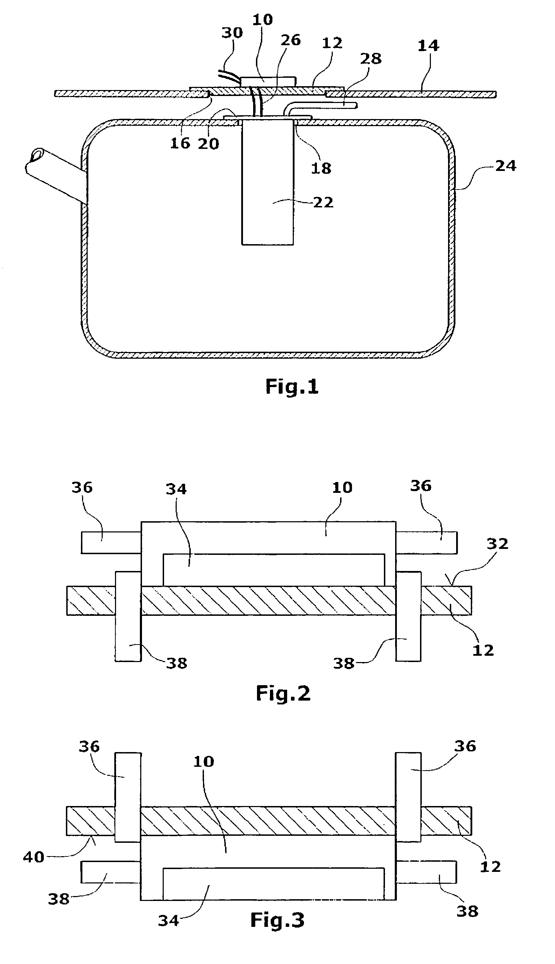

Bei einer bevorzugten Ausführungsform (Fig. 2) ist die Steuereinrichtung 10 auf einer Außenseite 32, d.h. auf der von dem Tank 24 abgewandten Seite des Karosseriedeckels 12 angeordnet. Zwischen der Steuereinrichtung 10 und dem Karosseriedeckel 12 ist eine Wärmeschutzeinrichtung 34 vorgesehen. Zum Verbinden der Steuereinrichtung 10 mit dem Kabelbaum sind elektrische Anschlüsse 36 vorgesehen. Weitere elektrische Anschlüsse 38, die zur Verbindung der Steuereinrichtung 10 mit den im Tank 24 angeordneten elektrischen Vorrichtungen 22 dient, erstrecken sich durch den Karosseriedeckel 12. Bei den elektrischen Anschlüssen 36, 38 kann es sich um Stecker handeln, die unmittelbar mit der Steuereinrichtung 10 oder über Kabelpeitschen mit der Steuereinrichtung 10 verbunden sind.

Bei einer weiteren bevorzugten Ausführungsform (Fig. 3) ist die Steuereinrichtung 10 auf einer Unterseite 40, d.h. der dem Tank 24 zugewandten Seite des Karosseriedeckels 12 angeordnet. Die Steuereinrichtung 10 ist wiederum mit einer in Richtung des Tanks 24 weisenden Wärmeschutzeinrichtung 34 verbunden. Ferner sind mit der Steuereinrichtung 10 wiederum elektrische Anschlüsse 36, 38 verbunden, wobei in dem in Fig. 3 dargestellten Ausführungsbeispiel die elektrischen Anschlüsse 36, die zur Verbindung mit dem Kabelbaum dienen, durch den Karosseriedeckel 12 hindurchgeführt sind.

## Patentansprüche

1. Kraftfahrzeugtank mit
einem Tank (24), der eine Tanköffnung (18) aufweist,
einem mit einer Fahrzeugkarosserie (14) verbindbaren Karosseriedeckel (12),
einer Steuereinrichtung (10) zum Steuern von innerhalb des Tanks (24) angeordneten elektrischen Vorrichtungen (22),
die Steuereinrichtung (10) mit den Vorrichtungen (22) verbindenden, durch die Tanköffnung (18) verlaufenden elektrischen Leitungen (26) und
an der Steuereinrichtung (10) vorgesehenen elektrischen Anschlüssen (36) zum Verbinden mit einem Kabelbaum,
**dadurch gekennzeichnet, dass**
die Steuereinrichtung (10) mit dem Karosseriedeckel (12) verbunden ist.

2. Kraftfahrzeugtank nach Anspruch 1, **dadurch gekennzeichnet, dass** die Tanköffnung (18) mit einem Tankverschluss (20), durch den die elektrischen Leitungen (26) hindurchgeführt sind, verschlossen ist.

3. Kraftfahrzeugtank nach Anspruch 1 oder 2, **gekennzeichnet durch** eine an der Steuereinrichtung (10) und/ oder dem Karosseriedeckel (12) vorgesehene Wärmeschutzeinrichtung (34).

4. Kraftfahrzeugtank nach Anspruch 3, **dadurch gekennzeichnet, dass** die Wärmeschutzeinrichtung (34) auf der in Richtung des Tanks weisenden Seite der Steuereinrichtung (10) angeordnet ist.

5. Kraftfahrzeugtank nach Anspruch 3 oder 4, **dadurch gekennzeichnet, dass** die Wärmeschutzeinrichtung (34) zusätzlich als Kühleinrichtung für die Steuereinrichtung (10) dient.

6. Kraftfahrzeugtank nach einem der Ansprüche 1-5, **dadurch gekennzeichnet, dass** die Steuereinrichtung (10) auf der von dem Tank (24) weg weisenden Seite (32) des Karosseriedeckels (12) angeordnet ist.

## Claims

1. A vehicle tank, comprising
a tank (24) having a tank opening (18),
a vehicle-body tank cap (12) adapted to be connected to a vehicle body (14),
a control means (10) for controlling electrical devices (22) arranged inside a tank (24),
electrical lines (26) extending through a tank opening (18) and connecting the control means (10) with the devices (22), and
electrical connectors (36) provided at the control means (10) for connection with a wiring harness,
**characterized in that**
said control means (10) is connected with a vehicle-body tank cap (12).

2. The vehicle tank according to claim 1, wherein the tank opening (18) is sealed with a tank closure (20) through which the electrical lines (26) are passed.

3. The vehicle tank according to claim 1 or 2, wherein a heat protection means (34) is provided at the control means (10) and/or the tank cap (12) of the vehicle body.

4. The vehicle tank according to claim 3, wherein the heat protection means (34) is arranged on the side of the control means (10) facing in the direction of the tank (24).

5. The vehicle tank according to claim 3 or 4, wherein the heat protection means (34) additionally serves as a cooling means for the control means (10).

6. The vehicle tank according to one of claims 1 - 5, wherein the control means (10) is arranged on the side (32) of the vehicle-body tank cap (12) facing away from the tank (24).

## Revendications

1. Réservoir de carburant de véhicule comprenant:
un réservoir de carburant (24) ayant une ouverture de réservoir (18),
un couvercle de châssis (12) agencé pour être attacher à un châssis de véhicule (14),
un moyen de commande (10) pour commander des dispositifs (22) électriques disposés au sein du réservoir (24),
des câbles (26) électriques reliant le moyen de commande (10) aux dispositifs (22) et passant par l'ouverture de réservoir (18), et
des connecteurs (36) électriques prévus au moyen de commande (10) pour le raccordement avec un faisceau électrique,
**caractérisé en ce que**
le dispositif de commande (10) est raccordé au bouchon de châssis (12).

2. Réservoir de carburant de véhicule selon la revendication 1, **caractérisé en ce que** l'ouverture de réservoir (18) est obturé par un bouchon de réservoir (20) à travers lequel sont passés les câbles électriques (26).

3. Réservoir de carburant de véhicule selon la revendication 1 ou 2, **caractérisé par** un moyen d'isolation thermique (34) prévu au moyen de commande (10) et/ou le couvercle de châssis (12).

4. Réservoir de carburant de véhicule selon la revendication 3, **caractérisé en ce que** le moyen d'isolation thermique (34) est disposé à la côté du moyen de commande (10) tournée vers le réservoir.

5. Réservoir de carburant de véhicule selon la revendication 3 ou 4, **caractérisé en ce que** le moyen d'isolation thermique (34) aussi sert comme refroidisseur pour le moyen de commande (10).

6. Réservoir de carburant de véhicule selon une des revendications 1 - 5, **caractérisé en ce que** le moyen de commande (10) est disposé à la côté (32) du couvercle de châssis (12) opposée au réservoir (24).
